**Europäisches Patentamt**

**European Patent Office**

**Office européen des brevets**

(11) Veröffentlichungsnummer: **0 183 073**

**A1**

# EUROPÄISCHE PATENTANMELDUNG

(21) Anmeldenummer: **85113782.8**

(22) Anmeldetag: **29.10.85**

(51) Int. Cl.⁴: **H 02 H 3/06**
**H 02 H 3/247**

(30) Priorität: **31.10.84 DE 3439862**

(43) Veröffentlichungstag der Anmeldung:
**04.06.86 Patentblatt 86/23**

(84) Benannte Vertragsstaaten:
**AT CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Schlenk, Manfred, Dipl.-Ing.**
**Von-Richthofen-Strasse 29**
**D-8900 Augsburg(DE)**

(72) Erfinder: **Häfner, Manfred, Dipl.-Ing.**
**Ganghoferstrasse 2**
**D-8900 Augsburg(DE)**

(54) **Wiedereinschaltvorrichtung für nach einer Störung abgeschalteter Stromversorgungsgeräte.**

(57) Die Erfindung bezieht sich auf eine Wiedereinschaltvorrichtung für nach einer Störung abgeschalteter Stromversorgungsgeräte. In der Praxis Kommt es immer wieder zu Störungsfällen in Stromversorgungsgeräten, die einen Systemausfall, beispielsweise einer Datenverarbeitungsanlage, hervorrufen. Eine wesentliche Erleichertung stellt es dar, wenn die Datenverarbeitungsanlage nach einer solchen Störung automatish wieder eingeschaltet wird. Die Erfindung sieht heirzu ein Gatterschaltung (G1...G5, FF1, FF2) mit Zeitglied (ZG) vor, die nach einer vorgegebenen Zeit die Stromversorgungsgeräte noch einmal einschaltet und bei anhaltender Störung eine endgültige Abschaltung gewährkleistet. Die Wiedereinschaltvorrichtung ist insbesondere für den Einsatz von Stromversorgungsgeräten bei Datenverarbeitungsanlagen geeignet.

EP 0 183 073 A1

0183073

VPA 84 P 1896 E

Siemens Aktiengesellschaft
Berlin und München

**Wiedereinschaltvorrichtung für nach einer Störung abgeschalteter Stromversorgungsgeräte**

Die Erfindung betrifft eine Wiedereinschaltvorrichtung für nach einer Störung abgeschalteter Stromversorgungsgeräte.

Obwohl die Elemente einer Datenverarbeitungsanlage so konstruiert werden, daß sich eine hohe Verfügbarkeit der Gesamtanlage ergibt, kommt es in der Praxis immer wieder zu Störungsfällen, die einen Systemausfall hervorrufen. Für den Betreiber stellt es dann eine wesentliche Erleichterung dar, wenn die Datenverarbeitungsanlage nach einer solchen Störung automatisch wieder eingeschaltet wird.

Dabei gibt es verschiedene Möglichkeiten. So können Stromversorgungen nach einem Fehler, sei es netz- oder ausgangsseitig (z.B. Kurzschluß an den Ausgangsklemmen) entweder ganz abgeschaltet oder nicht wieder eingeschaltet werden, obwohl der Fehler weiterhin anliegt oder sie bleiben trotz Fehler dauernd eingeschaltet.

Aufgabe der vorliegenden Erfindung ist es, eine bei anhaltender Störung von Stromversorgungsgeräten, deren Bauelemente bei Wiedereinschaltung vor unnötiger Belastung schützende Wiedereinschaltvorrichtung zu schaffen.

Zur Lösung dieser Aufgabe wird die Wiedereinschaltvorrichtung derart ausgebildet, daß einem eingangsseitig mit mehreren Eingangssignalen beaufschlag-

Zk 1 Fdl/ 30. 10. 1984

baren ODER-Gatter zwei NAND-Gatter nachgeschaltet sind, deren jeweils einer Eingang mit dem Ausgang des ODER-Gatters und deren jeweils anderer Eingang von einem gemeinsamen weiteren Ausgangssignal gespeist ist, daß der Ausgang des ersten NAND-Gatters mit dem Eingang eines dritten NAND-Gatters verbunden ist, dessen zweiter Eingang mit einem Steuersignal beaufschlagbar ist und der Ausgang des zweiten NAND-Gatters mit dem Setzeingang eines ersten Flip-Flops verbunden ist, dessen Rücksetzeingang genau so wie der Rücksetzeingang eines zweiten Flip-Flops mit dem Ausgang des dritten NAND-Gatters gekoppelt ist, daß der Ausgang des ersten Flip-Flops mit dem Eingang eines Zeitgliedes verbunden ist, dessen Ausgang an den einen Eingang eines UND-Gatters geführt ist, über dessen zweiten Eingang ein zweites Steuersignal zuführbar ist, daß der Ausgang des UND-Gatters an den Setzeingang des zweiten Flip-Flops geführt ist, dessen Ausgang eine Schaltspannung abgibt.

Weiterhin ist vorgesehen, daß das ODER-Gatter mit drei Eingängen versehen ist, an denen Signale für die Temperaturüberwachung für eine Hilfsspannungsüberwachung und für eine Überspannungsüberwachung zuführbar sind, und daß das Eingangssignal für die ersten beiden NAND-Gatter zur Unterspannungsüberwachung dient, daß das erste Steuersignal am dritten NAND-Gatter zur Überwachungsstillegung und das zweite Steuersignal am UND-Gatter als Ein/Aus-Signal für die Wiedereinschalteinrichtung dient.

Durch diese Maßnahmen wird die Belastung der Schaltungselemente dadurch verringert, daß nach einem Fehler nach einer bestimmten Wartezeit nur ein einziger Wiedereinschaltversucht durchgeführt wird. Liegt bei diesem Einschaltversuch der Fehler noch immer vor, so wird die Stromversorgung ganz abgeschaltet, da dann jedes weitere
Einschalten sinnlos ist und dadurch weitere Folgeschäden
in Verbraucher- und Stromversorgung vermieden werden.

Anhand des Ausführungsbespiels wird die Erfindung näher
erläutert.

An den drei Eingängen des ODER-Gatters G1 werden Signale für die Temperaturüberwachung TÜ für die Hilfsspannungsüberwachung HÜ und für die Überspannungsüberwachung ÜÜ zugeführt. Der Ausgang der ODER-Schaltung·
ist mit jeweils einem Eingang zweier NAND-Gatter G2,
G3 verbunden, deren jeweils zweiter Eingang ein Signal
zur Unterspannungsüberwachung zugeführt wird. Der Ausgang des ersten NAND-Gatters G2 ist mit dem einen Eingang des dritten NAND-Gatters G4 verbunden, dessen
zweitem Eingang ein Signal zur Überwachungsstillegung
zugeführt wird. Der Ausgang des zweiten NAND-Gatters
G3 ist an den Setzeingang eines ersten Flip-Flops FF1
geführt, während der Rücksetzeingang dieses ersten
Flip-Flops FF1 sowie der Rücksetzeingang des zweiten
Flip-Flops FF2 mit dem Ausgang des dritten NAND-Gatters
G4 verbunden ist. Der Ausgang des ersten Flip-Flops FF1
ist über das Zeitglied ZG mit dem einen Eingang des
UND-Gatters G5 verbunden, dem über seinen zweiten Eingang ein erstes Steuersignal WEE zugeführt wird. Der
Ausgang dieses UND-Gatters G5 führt an den Setzeingang des zweiten Flip-Flops FF2, an dessen Ausgang eine
Spannung abnehmbar ist, die beispielsweise den Regler
eines Stromversorgungsgerätes ein- bzw. ausschaltet.

Die Arbeitsweise der Wiedereinschaltvorrichtung ist wie
folgt:Tritt an einem der Eingänge der ODER-Gatter G1
bzw. der beiden NAND-Gatter G2, G3 ein Fehler auf
(L-Pegel),so werden die RS-Flip-Flops FF1 und FF2 über Gatter G4 zurückgesetzt. Die Stromversorgung wird abgeschaltet. Der Ausgang Q1 des ersten Flip-Flops FF1
nimmt L-Pegel an und triggert das Zeitglied ZG. Nach
Ablauf der frei wählbaren Zeit des Zeitgliedes ZG wird
das zweite Flip-Flop FF2 über das UND-Gatter G5 wieder
gesetzt. Die Stromversorgung wird erneut eingeschaltet.

Während des Hochlaufvorgangs der Ausgangsspannungen der
Stromversorgung wird durch einen zusätzlichen Schaltkreis (Überwachungsstillegung Ü5) über Gatter das dritte
NAND-Glied G4 das Rücksetzen des ersten Flip-Flops FF1
verhindert. Sobald kein Fehler an den Eingängen des ODER-
Gatters G1 bzw. des zweiten NAND-Gatters G3 mehr anliegt, wird das erste Flip-Flop FF1 über das zweite
NAND-Gatter G3 erneut gesetzt. Die Wiedereinschaltvorrichtung ist bereit für den nächsten Fehlerfall.

Liegen nach Ablauf der Hochlaufzeit noch Unterspannungsfehler vor (z. B. Kurzschluß an den Ausgangsklemmen),
so unterbleibt das erneute Setzen des ersten Flip-
Flops FF1 über G3. Es kann kein weiterer Einschaltversuch erfolgen.

Liegt ein Dauerfehler an den Eingängen des ODER-Gatters
G1 vor, (Überspannungen, Temperaturfehler), so bleibt
das zweite Flip-Flop FF2 zurückgesetzt. Es erfolgt
kein weiterer Einschaltversuch mehr.

Über das UND-Gatter G5 kann die Wiedereinschalteinrichtung mittels des zweiten Steuersignals WEE außer
Betrieb gesetzt oder wieder eingeschaltet werden.

2 Patentansprüche

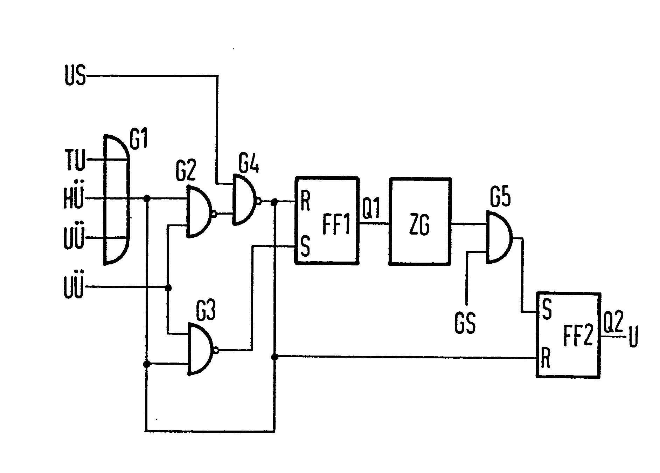

Patentansprüche

1. Wiedereinschaltvorrichtung für nach einer Störung abgeschalteter Stromversorgungsgeräte, d a d u r c h g e k e n n z e i c h n e t, daß einem eingangsseitig mit mehreren Eingangssignalen (TÜ, HÜ, ÜÜ) beaufschlagbaren ODER-Gatter (G1) zwei NAND-Gatter (G2, G3) nachgeschaltet sind, deren jeweils einer Eingang mit dem Ausgang des ODER-Gatters (G1) und deren jeweils anderer Eingang von einem gemeinsamen weiteren Ausgangssignal (UÜ) gespeist ist, daß der Ausgang des ersten NAND-Gatters (G2) mit dem Eingang eines dritten NAND-Gatters (G4) verbunden ist, dessen zweiter Eingang mit einem Steuersignal (ÜS) beaufschlagbar ist und der Ausgang des zweiten NAND-Gatters (G3) mit dem Setzeingang eines ersten Flip-Flops (FF1) verbunden ist, dessen Rücksetzeingang genaus so wie der Rücksetzeingang eines zweiten Flip-Flops (FF2) mit dem Ausgang des dritten NAND-Gatters (G2) gekoppelt ist, daß der Ausgang des ersten Flip-Flops (FF1) mit dem Eingang eines Zeitgliedes verbunden ist, dessen Ausgang an den einen Eingang eines UND-Gatters (G5) geführt ist, über dessen zweiten Eingang ein zweites Steuersignal (WEE) zuführbar ist, daß der Ausgang des UND-Gatters (G5) an den Setzeingang des zweiten Flip-Flops (FF2) geführt ist, dessen Ausgang eine Schaltspannung (U) abgibt.

2. Wiedereinschaltvorrichtung nach Anspruch 1, d a d u r c h g e k e n n z e i c h n e t, daß das ODER-Gatter (G1) mit drei Eingängen versehen ist, an denen Signale für die Temperaturüberwachung (TÜ) für eine Hilfsspannungsüberwachung (HÜ) und für eine Überspannungsüberwachung (ÜÜ) zuführbar sind, und daß das Eingangssignal für die ersten beiden NAND-Gatter (G2, G3) zur Unterspannungsüberwachung (UÜ) dient, daß das

0183073

erste Steuersignal am dritten NAND-Gatter (G4) zur Überwachungsstillegung und das zweite Steuersignal am UND-Gatter (G5) als Ein/Aus-Signal (WEE) für die Wiedereinschalteinrichtung dient.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-B-2 431 167 (SIEMENS AG) * Spalte 1, Zeile 65 - Spalte 3, Zeile 1, Spalte 4, Zeilen 36-39 * | 1 | H 02 H 3/06 H 02 H 3/247 |
| Y | DE-B-2 318 437 (ADDRESSOGRAPH-MULTIGRAPH CORP.) * Spalte 2, Zeile 17 - Spalte 21, Figuren 2, 4 * | 1 | |
| A | US-A-4 084 204 (N.M. JACOBUS) * Zusammenfassung, Figur * | 1 | |

RECHERCHIERTE SACHGEBIETE (Int. Cl 4)

H 02 H 3/06
H 02 H 3/07
H 02 H 3/093
H 02 H 3/247
H 02 H 7/20

Der vorliegende Recherchenbericht wurde für alle Patentansprüche erstellt

| Recherchenort BERLIN | Abschlußdatum der Recherche 20-01-1986 | Prüfer LEMMERICH J |
|---|---|---|